# EUROPEAN PATENT APPLICATION

(11) **EP 2 317 437 A2**
(43) Date of publication of application: **04.05.2011**
(21) Application number: 09382286.4
(22) Date of filing: 17.12.2009
(51) Int. Cl.: G06F 9/54

(54) **Module and methods for the interconnection of heterogeneous equipment with limited resources by means of object-oriented communication middleware**

(30) Priority: 26.12.2008 ES 200803715
(71) Applicant: Universidad de Castilla-La Mancha, 02071 Albacete (ES)
(72) Inventor: Vila Alises, David, 02071, ALBACETE (ES); Moya Fernandez, Francisco, 02071, ALBACETE (ES); Villanueva Molina, Félix Jesús, 02071, ALBACETE (ES); Baraba Romero, Jesús, 02071, ALBACETE (ES); Rincon Calle, Fernando, 02071, ALBACETE (ES); Lopez Lopez, Juan, Carlos, 02071, ALBACETE (ES)
(74) Representative: Carpintero Lopez, Francisco

(57) **Abstract**

The invention relates to a module and methods for the integration of distributed objects in embedded systems which can be implemented by means of two complementary alternatives: embedded software and hardware synthesis. The method allows manufacturing less expensive and smaller remote sensing and actuation devices, furthermore maintaining a very high degree of interoperability with the communication middleware, which considerably facilitates their operation possibilities and their integration with other pre-existing systems.

## Description

### Background of the Invention

### Technical Field

The present invention relates to the technical sector of the automatic control of industrial processes, remote control and remote measurement and miniaturization of detection and operating devices. It also considerably relates to home automation, building automation, pervasive computing and ambient intelligence systems.

Some examples of possible applications of the present invention are:
- Low cost device networks for automating tasks in homes, offices, farms, industrial facilities, etc.
- Integration of devices for providing value-added technology-independent services (video-surveillance, accident prevention, monitoring, remote assistance, etc.).
- Implementation of hardware devices which interact with standard software without the need for specific firmware or controllers.

### Description of the Related Art

The word middleware (intermediate software) is traditionally defined as the layer of software located between the operating system and the applications; its purpose is to provide the mechanisms for communication between elements of a distributed system.

Generally, any middleware defines programming interfaces, communication protocols, and an information model for objects and services, all to allow the construction of heterogeneous distributed applications. Some examples of this type of platforms are CORBA (see reference [1]), ZeroC Ice (reference [2]), Web Services (reference [3]), Jini (reference [4]), etc.

A great deal of the middleware for heterogeneous distributed systems also allows applications written in different languages and on different platforms to interact based on precisely defining the communication protocols and the programming interfaces for each language.

The advantages of object-orienting techniques are well known in software architectures, and object-oriented distributed middleware has a long history of successful applications in many information technology business areas. Furthermore, many of the object-oriented distributed platforms are supported by the industry and their tools, protocols and services have grown accordingly. The large number of applications developed grant the services, protocols and applications certain reliability guarantees as a result of experience and continued use in sensitive applications.

Many earlier initiatives targeted the miniaturization of the existing middleware. For example, the *Object Management Group* published the MinimumCORBA specification (reference [5]), a lightweight version of its popular CORBA architecture (reference [1]). MinimumCORBA eliminates the more expensive features from the communications core maintaining a high degree of interoperability with standard CORBA objects.

As indicated in reference [6], there are mainly three types of proposals for distributed object miniaturization:
1. Eliminating the more expensive features, but maintaining the generality.
   This first strategy is the one used by dynamicTAO (reference [7]) and its offshoots: LegORB (reference [8]) and UIC-CORBA (reference [9]). LegORB is a modularized ORB which has the capability of being able to be dynamically configured. The TAO monolithic library (reference [10]) breaks down into a set of independent functional blocks which can be omitted in the target application. According to its authors, a CORBA client is around 20KB in a HP Jornada 600 using Windows CE as the OS, and in a CORBA client on PalmPilot with PalmOS 3.0 it is about 6 KB.
   UIC (Universally Interoperable Core) defines a component-based middleware skeleton. Each component encapsulates a reduced set of characteristics that can be dynamically loaded depending on the specific platform, device and network. As its name indicates, UIC can be used to implement communications cores for other middleware in addition to CORBA, such as Java RMI or DCOM. A static CORBA server takes up about 35 KB in an SH3 with Windows CE.
   A similar commercial product is e*ORB (reference [11]), a communications core with real-time characteristics capable of being executed in an HP iPAQ or in a Texas Instruments TMS320C64X DSP.
   Another representative development of this first strategy is MicroQoSCORBA (reference [12]), a customized adjustable communications core that can be generated from predefined pieces to implement servers and clients for specific applications and devices (it has been tested with SaJe (reference [14]) and TINI (reference [15]).
   nORB (reference [13]) implements a set of transport protocols as plug-ins, including environment-specific protocols (ESIOP in CORBA technology). It shares many ideas of MicroQoSCORBA, such as the fact that it uses a simplified version of the standard GIOP protocol, called GIOPLite.
2. Adapting the middleware to specific devices. A representative sample of this second strategy for the development of lightweight middleware is TINIORB (reference [16]), a MinimumCORBA-based communication core which has been especially adapted for the Dallas Semiconductor TINI device. PalmORB (reference [17]) is also another example of this strategy.
3. Using a gateway. In other words, constructing devices with their own very simple protocol but which requires an intermediate device to carry out the interoperability with standard middleware objects. This is the approach used in UORB (reference [6]) and one of the integration alternatives proposed by SENDA (reference [18]).
   Another interesting proposal of the same type is (reference [19]). This work shows how a set of small 8-bit microcontrollers can appear as a set of CORBA objects. The host executes a proxy for each connected device and the communications between the devices and the proxy use a non-standard specific protocol.
   The present invention is based on some earlier articles of the ARCO group. Particularly, articles [A] and [B] lay the groundwork of the concept which supports the present invention. Articles [C] and [D] describe a service discovery protocol that can be applied to the modules of the present invention.
   In any case, the present text introduces significant improvements and contributions in the module, processes for the operation thereof and in the method for the construction and deployment thereof. Said contributions constitute the central part of the filed claims.

### Description of the Invention

### Technical problems considered

All the earlier works follow the same basic rules: eliminate the dynamic instantiation and invocation methods, simplify the interface definition language (OMG IDL in the case of CORBA), eliminate the complex or large data types, eliminate some fields of the communications protocol, eliminate or simplify the message types used in the protocol, eliminate the support for indirect references and for common services, modularize the communications core and instantiate only those components which are actually needed in each case.

It is important to point out that all the communications cores mentioned above require many additional support utilities: data type serialization, communication primitives, operating system, etc., such that the actual memory requirements are larger orders of magnitude than the mentioned sizes.

Even the smallest distributed object implementation is mucho larger than what would be feasible for the target environment of the present invention. Requiring a TINI device (which currently costs about 30 euros) for each component of the ubiquitous system would mean astronomical prices for a minimally useful system. Considering a Java virtual machine with RMI support for each light bulb or switch of a building is completely inadmissible in many aspects, not just the economical one.

The first problem that arises when trying to embed middleware such as Ice or CORBA in a typical node for a sensor/actuator network (SAN) is the amount of computational resources (especially memory) that is needed for the cores of this middleware.

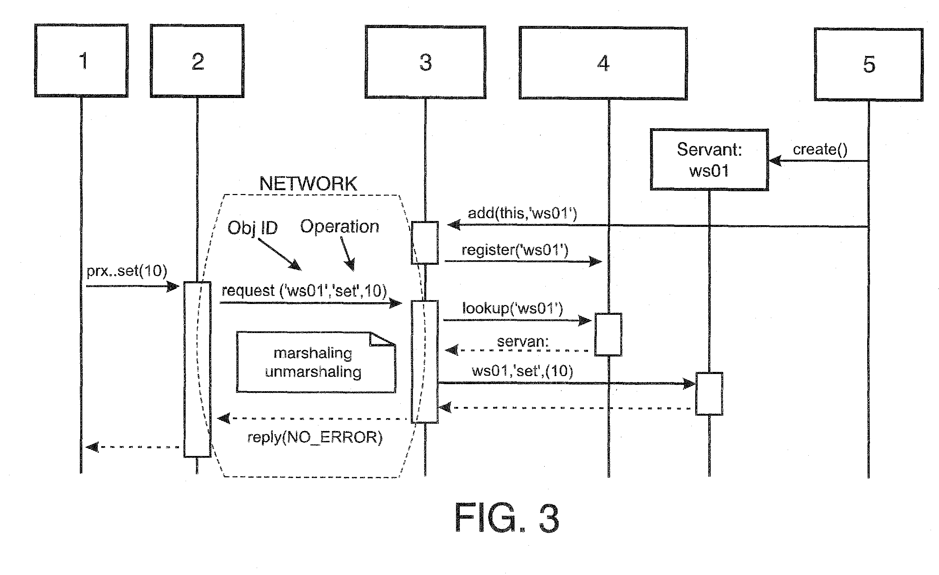

Figure 3 shows the simplified diagram of a remote method invocation (RMI) in standard object-oriented standard middleware such as CORBA.

In a conventional object bus (ORB), a remote invocation involves one or more object adapters, an object map which maintains the correspondence of servant-object pairs and a set of servants, which implement of the behavior of the objects.

There are two important elements in the request message:
- The object identifier, which determines to which object the message is addressed and ultimately which servant will handle it.
- The operation, which determines which method for the servant must be executed.

The standard communication is achieved by means of a protocol such as GIOP (General Inter-ORB Protocol) in the case of CORBA or IceP (Ice Protocol) in the case of ZeroC Ice.

To assure basic interoperability between the middleware components there must be a certain degree of compatibility, regardless of whether said objects are carried out in conventional software, embedded software or hardware implementations. This is achieved by following the rules laid down by the specific middleware and the associated communications protocol, such as GIOP or IceP.

CORBA is a fairly veteran architecture and a great deal has been written about its implementation possibilities in embedded systems. Most of the work carried out up until now has been greatly affected by MinimumCORBA. This specification seeks to reduce the complexity of ORB by eliminating particularly complex capabilities. MinimumCORBA still complies with CORBA but with reduced capabilities. The main advantage is that MinimumCORBA objects are entirely portable and can be executed without any problems on a complete ORB.

### Object of the Invention

Given that the success of a technology is determined in part by the applications it can support, it is considered herein that the simpler the development of new applications, more and more varied and faster applications will be available on the market. In this sense, the solution of the present invention allows developing applications with new technologies without having to learn new methodologies, operating systems, interfaces or programming languages.

Many earlier works have been focused on reducing this standard middleware so that it can be integrated in devices that are less expensive than a personal computer. The present solution also explores this trend but uses a much more radical perspective. Instead of reducing standard middleware, the automatic generation of the minimal amount of software necessary for maintaining interoperability, without including any of the middleware with which it is to be compatible, is analyzed herein.

The object of the invention is a module and a method for the integration of distributed objects in embedded systems. The present invention involves one or more modules which allow any one sensing or actuating device to be able to be accessed remotely by means of object-oriented communication middleware. Said modules can be manipulated individually or jointly depending on the characteristics of the middleware and of the available communications system.

This type of module can be used in a wide range of both domestic and industrial applications, offering the possibility of access with the necessary granularity for large deployments of sensor and actuator elements of all kinds, and by a wide range of data communication means, including wireless networks.

The main advantages with respect to earlier inventions include the possibility of using much smaller, simpler and less expensive computational devices because the methods for integration result in a considerable reduction of the memory and computational capability requirements. Other important advantages are the autonomy of the modules and the use of standard communication middleware, with the subsequent savings in development tools and personnel training.

### Brief Description of the Drawings

Figure 1 shows the module consisting of three components when it is used as means for accessing a sensor/actuator.
Figure 2 shows the module as gateway between networks with different technologies.
Figure 3 illustrates the implementation of conventional middleware in a server frame, where one involves an object adapter, an object map and a servant.
Figure 4 illustrates the same scenario as in Figure 3, when one of the modules object of the invention is used.
Figure 5 illustrates a basic use scenario of an active object in which a sensor reports to a second "observer" object any change occurring in the magnitude it measures.
Figure 6 shows another use scenario for active objects in which, in this case, the "observer" object is an event channel.
Figure 7 depicts the sequence of operations that occurs while setting up the query mechanism of a random group of sensor/actuator objects by means of using event channels and how the application receives the results.
Figure 8 shows the use of a module with the configuration of Figure 2 for achieving the integration of a remote sensor, which uses a different technology.
Figure 9 shows the roles of the service programmer (right side) and of the module programmer (left side) and their relationship with the necessary code and interface specifications.
Figure 10 depicts the work flow by means of which the application is installed in the module.
Figure 11 shows the diagram of a specific compiler as an example of implementation of the process described in Figure 10 for ZeroC Ice middleware.
Figure 12 shows the work flow of the HwO (hardware object) generation process according to the second embodiment of the invention.
Figure 13 is an example of a hardware object for a set (buffer) of integers, showing the synchronization signals necessary for the integration thereof in the design.
Figure 14 shows the HwO platform providing accessibility to the HwO to and from the outside, and
Figure 15 shows the typical configuration of a proxy, including the adaptation of the data from the bus by means of the Port Acquisition Units (PAU) and the Port Delivery Unit (PDU).

### Detailed Description of the Invention

The main purpose of the module object of the invention is to provide transparent access to any sensor/actuator by means of a general purpose communication middleware such as CORBA, Jini, Web Services or ZeroC Ice.

The processes defined for achieving interoperability between different devices by means of respective modules, for example the transparent functional interconnection of a sensor and an actuator of a different technology using a given communication middleware, also form part of the invention.

The concept of sensor must be given the broad interpretation as being any device capable of collecting the value of a physical magnitude either passively (when it is interrogated) or actively, i.e., on its own initiative, for example when the value of the measured magnitude changes. The scope of use of said sensors or the nature of the physical magnitude is not limited. This definition therefore involves such varying sensors like a push button, a thermometer or a video camera. In the same manner, the same guideline can be applied for the concept of actuator, but bearing in mind that the operation on certain actuators can involve consequences in the working of complex systems such as, for example, the activation of the motor of an elevator, a solenoid valve or a genset.

Each module is formed by three main components: a computational element, a network interface and a transducer as an interface with the sensor/actuator device.

Unlike earlier inventions on middleware miniaturization, the present invention uses a completely innovative approach. Communication with the middleware is based on standard message acknowledgement by means of finite state automatons and the responses are constructed based on parameterizable templates, assuring messages consistent with the protocol used by the middleware, for example GIOP (General Inter-ORB Protocol) in the case of CORBA, or IceP in the case of ZeroC Ice.

The first step for developing any distributed application using object-oriented communication middleware is to design and declare the interfaces between the objects and their clients. Said specification is usually done in a specific programming language, such as IDL (Interface Definition Language) in the case of CORBA, Slice in the case of ZeroC Ice or Java in the case of Jini. Then, the ORB (or communications core) generates the messages for each method, and with the corresponding data types, in the suitable protocol. The task of identifying a message and constructing an acknowledgement automaton for the messages from the specified interface can obviously be a very tedious task, so it should and must be automated.

On one hand, the embodiment of the implementation embedded in the modules and on the other, of the applications that will access them, marks the frontier between two clearly different disciplines with different tools, processes and responsibilities.

The implementation of the modules is typically closely related to one or more sensor or actuator devices, such that they generally play the role of server. The applications playing the role of clients are designed and implemented in the same way as that used in a standard design flow for distributed applications. For the application programmer using a sensor or actuator network that can be accessed by means of integration modules, the entire process occurring within the module is transparent and indistinguishable from a conventional distributed object.

Therefore, any software technology or tool necessary for the development of the client application, which will typically be installed in a general purpose computer, is outside the scope of this invention. In contrast, the mechanisms which allow a module to send the magnitude value of a sensor or actuator to a remote object by means of an invocation through the communication middleware are considered part of this invention. So even though the main objective of the method described herein is the implementation of distributed objects (servers), these devices will occasionally need to invoke messages on other well known objects, typically event channels. This precision is necessary because in these cases the module functions like a client of a remote object.

### Interoperability

This section briefly describes some of the characteristics of the CORBA application protocol (GIOP) and Ice application protocol (IceP). These characteristics must be respected in order to achieve a sufficient degree of compatibility so as to assure basic interoperability of picoObjects with the middleware. The issues to be considered when adapting the invention to other protocols can be used as an example.

### picoCORBA

PicoCORBA goes much further than MinimumCORBA in terms of cutting back on capabilities. The picoCORBA objects are not at all portable because they are usually implemented directly in the assembly language of the specific platform. Even using C or any low level language, the OMG mapping (correspondence or association map) for these languages (if it exists) is not at all respected because there is no library with which this code can be linked. This is obviously a reasonable price in exchange for the considerable size reduction that is in turn achieved.

The prototype made is capable of obtaining a byte flow from the network and returning a response. The transport protocol that is used for making it possible can be quite varied: TCP, SLIP, SNAP, LonWorks or any other reliable or even unreliable transport protocol if the specific middleware allows it.

As explained above, there are only two important points in which to calculate verification sums: when the object identifier has been completely received and during reception of the name of the method. To further simplify this process, the object_keys of all the picobjects of a server have the same size so the exact byte of the message in which the calculation must be performed is known beforehand. Using a fixed size object_key does not cause interoperability problems. This chain appears in IOR (CORBA) and the standard states that the client must respect it as it reads it.

### GIOP version

The current version of picoCORBA is in accordance with GIOP 1.0. This does not involve any restriction since the GIOP specification forces any client to "speak" with the server in a GIOP version that is equal or inferior to the one reflected in the reference published by the server (its IOR), i.e., it is the server who decides.

If the picoCORBA object supports GIOP 1.0, and this is reflected in the corresponding IOR, any client complying with the standard must be able to interoperate with it using the version, and the server is not forced to implement anything else.

### Byte order

The GIOP specification indicates that the one that initiates the communication determines what the byte order is (big endian or little endian) while the connection lasts. In the case of GIOP 1.0, the initiator of the connection is always the client. The server must perform the conversion when necessary and respond with the order indicated by the client.

In theory, the application of the picobjects is aimed at delimited environments in which this aspect can be controlled, such that supporting only one of the orders does not raise interoperability problems. For picoCORBA, supporting the two orders involves duplicating the amount of messages that the device can acknowledge and generate. It involves a considerable cost increase with regard to the amount of resources consumed but, for certain applications that may need it, it can be considered appropriate.

### CORBA::Object interface

The CORBA::Object interface defines a set of methods that all CORBA objects must support. However, most of these methods are handled by the remote proxy of the object or by the local ORB, such that they do not result in being remote invocations to the server.

The requestor considers that the only operations actually necessary for a suitable working are non_existent() and is_a(); the first one allows checking if the object is alive, the second one offers very necessary introspection capabilities. Since there is no other component it is the device, the implementation generated by picoCORBA must be the one which provides the device with the ability to respond to these two methods.

### GIOP messages

The restrictions that apply to the different messages, which ones are supported and to what extent, are explained below. All the clarifications refer to chapter 15 of the CORBA specification entitled General Inter-ORB Protocol. There are non-supported messages, but those that are supported do not undergo any format modification.

GIOP version 1.0 includes the following messages:
- Request (from the client to the server)
- Response (from the server to the client)
- Request cancelation (from the client)
- Location request (from the client)
- Location response (from the server)
- Close connection (from the server)
- Error message (both)

GIOP heading. There is no difference with the standard heading except that the value of the GIOP_version field is always 1.0 and the byte_order field is constant in the case of minimal implementation.

Request messages. These correspond to method invocations of the remote object. The following considerations are made:
- The service_context field is ignored.
- The value of the response_expected field is ignored. The picobjects always generate responses even though they are not requested. This behavior complies with the standard because the clients in turn ignore unrequested responses.
- The object_key field identifies the object on which the method is invoked. The picobjects use constant size object keys. This is transparent for the clients and does not affect interoperability, but it is very suitable for message acknowledgement.
- The requesting_principal field is obsolete and is ignored. The request messages include the value of the parameters of the method and can be acknowledged by the picoCORBA server according to the specification of the IDL interface.

Response messages. The response messages are generated as a result of a method invocation. The picoObjects always generate a response message if the request message is correct, otherwise they do not return anything. The content of the response message depends on the request message and on the result of the invocation of the corresponding user process. The considerations made in this case are:
- The service_context and request_id fields are copies of the values received in the request.
- The reply_status field always contains NO_EXCEPTION since picoCORBA does not support exceptions or location forward information.

Request cancelation messages. The GIOP specification states that the servers can ignore this message type and, even having received them, process the request and generate a response message. Therefore, picoCORBA completely ignores them and it nevertheless perfectly complies with the specification.

Location messages. This message type is used by ORB clients to locate objects. PicoCORBA does not support this mechanism and therefore ignores these messages.

End of connection messages. These messages serve to notify a client of the disconnection of a server. Given that picoCORBA objects are implemented in embedded devices, it is understood that they are "always on", so this type of message will never need to be sent.

Error messages. These messages are used so that the receiver can inform the emitter that it is sending incorrect messages. Given that picoCORBA ignores any non-supported message, it also ignores poorly formed messages. PicoCORBA cannot send incorrect messages either given that it generates them by means of an automaton.

If this were to happen, it would mean that there is a failure in the implementation and it must be replaced. In any case, it would be useless to process error reports given that the picoCORBA server does not have the capability to recover due to a problem of this type. For this reason, picoObjects ignore the error messages and never generate them.

### picolce

ZeroC Inc. has developed a distributed object communications core called Ice (Internet Communication Engine) constructed from the experience in CORBA, but free of legal and bureaucratic restrictions. It implements more functionalities than any other distributed object platform (object persistence and migration, authentication, security, replication, deployment services, firewall gateways, etc.). A summary of the differences between Ice and CORBA is available in reference [2].

Despite the scarce support for embedded platforms, Ice offers several advantages over CORBA with respect to the reduction of the amount of resources necessary. The IceP protocol is simpler than the GIOP protocol due to several design decisions:
- All the messages are always little endian such that it is not necessary to be concerned about the byte order.
- It has support for unreliable transport protocols such as, for example, UDP (much easier to implement in low cost embedded devices).
- There are fewer message types and it is possible to achieve full interoperability despite not implementing all of them.
- The unprocessed fields of the messages can be easily discarded because they are usually preceded by a field indicating the total length.
- There are no data alignment requirements for the messages in the cable.

### Interface Ice::Object

As in the case of CORBA, all Ice objects implement by default the Ice::Object interface, which is shown below:

```
 interFaceObject {
 void ice_ping();
 bool ice_isA(stringtypelD);
 string ice_id();
 StrSeq ice_ids();
 };
```

The picolce objects implement all these methods, so a suitable behavior as well as a standard interface level is assured.

### IceP messages

The Ice protocol uses the following messages:
- Request (from the client to the server)
- Request by batches (from the client to the server)
- Response (from the server to the client)
- Connection validation (from the server to the client)
- Close connection (both directions)

The connection validation and close connection messages are only used in connection-oriented transport protocols.

Picolce acknowledges all these messages with the exception of the Request by batches, but this does not involve an interoperability problem since said message is used as an optimization mechanism for groups of requests.

Specifically, the picolce object (as a server) is capable of acknowledging request and close connection messages, and is capable of generating response and validation messages.

Message heading. Picolce uses standard IceP headings with the exception of one restriction: message compression is not supported. The *compressionStatus* field is always equal to 0. However, this does not raise any interoperability problem since message compression is optional according to the specification of the middleware.

Request message. These are the messages sent by the client which trigger executing a method in an object of the server. The message has the following fields:

```
 structRequestData {
 int requestld;
 Ice::Identify id;
 Ice::StringSeq facet;
 string operation;
 byte mode;
 Ice::Context context;
 Encapsulation params;
 };
```

- The requestld field is an integer identifying the message. Its value is copied in the response message.
- The id field identifies the object on which the method is invoked in a manner similar to the GIOP object_key. Constant size object keys are also used for the same reason.
- The facet field.

The request messages include the value of the parameters of the method and can be acknowledged by the picolce server according to the specification of the Slice interface.

Response message. The response message contains the result of a two-way invocation, i.e., the output parameters and the return value. The response fields are:

```
 structReplyData {
 int requestld;
 byte replyStatus;
 Encapsulation body;
 };
```

- requestld is the value obtained for the homonymous field.
- The replyStatus field indicates the success of the operation or any type of error. The minimum picoObject covers 2 of the 8 possible responses. A value 0 indicates success in the location of the object and execution of the method. In case of an erroneous value for the object identifier, the name of the method or other type of error the value of this field will be Unknown Exception(7).

It is possible to implement a more sophisticated management for error processing which includes error acknowledgements or exception triggering. This is possible at the expense of an increase in memory consumption. As in other cases, this additional functionality will exist only when the platform allows it.

### Connection validation message

When an object (server) receives a new connection of a client (connection-oriented protocol) the first thing the server does is send a special message to validate the connection. Only when the client has received said message does it start to send request messages. It is a small message formed only by a heading (14 bytes) and its entire content is completely static, so it represents no problem for being implemented in picoObjects.

### Close connection message

When a client does not want to make any more requests, it sends the CloseConnection message. The object must in turn respond with other CloseConnection messages. An Ice server can also send this message to indicate to the client that it will not continue handling its requests. Given that the picoObjects are considered "always on", they will never send a message of this type.

### Specific features of the Invention

The most important features of both the module and of the methods which allow obtaining relevant practical advantages by means of their use, all of which are constituent parts of the invention described herein, are described below.

### Active objects

The active objects are distributed objects implemented by means of modules which have the quality of reporting their status asynchronously, i.e., without there being an explicit prompt by the party that will receive the information. Any active object has a reference to a second object functioning as an "observer". In the general case, this "observer" object is an event channel, such that a random amount of consumers (other distributed objects) can subscribe to receive the modifications that the status of the active object experiences.

Two types of active (non-exclusive) objects are established:
- The reactive objects send messages to the associated observer whenever they receive a standard ping message, independently of the emitter of said message.
- The proactive objects send messages to the associated observer whenever the value of their status changes independently of the reason for which this fact occurs.

The active object is frequently used in the implementation of sensor modules, such that the potential parties concerned with the value of the sensor can have updated information of said value without needing to continuously make prompts. In any case, it is possible to make actuator modules functioning as active objects. This allows their observers to have updated information about the changes that the actuator undergoes, presumably as a consequence of third parties, usually clients.

### Support for group query

A typical problem in sensor networks is the need to read the value of a set of them in the same instant. To provide this functionality reactive objects are also used. Any service concerned with a set of sensors can perform the following sequence of operations:
- Obtain the references to all the objects.
- Create a query event channel, or locate a module that offers the same functionality.
- Subscribe to the objects in the mentioned channel.
- Obtain the references to the event channels (observers) associated with each object.
- Create a second result collection channel.
- Link the observers of the sensor objects with the result channel.
- The service subscribes to itself in the result channel.
- Invoke a ping()message on the query channel.

At this time it will start to receive invocations from each sensor. These messages include the value of the measured magnitude and the object identifier, such that the service can find out from which sensor each value comes, which is of great help in generating high level information such as the identification of "hot areas", gradients, etc.

### Announcements

The modules, independently of the use for which they are intended, have the possibility of being known in the environment by means of a specific method invocation in a known remote object or in an event channel if there is one. Two basic (non-exclusive) alternatives are defined for the implementation thereof:
- The module periodically sends an announcement message. It has some drawbacks: it reduces the lifetime of the batteries in the case of independent sensors or actuators, as is the case of wireless sensor networks. In addition, it generates unnecessary traffic from the time that all the possible concerned parties know of their existence.
- The module responds with an announcement message when a concerned client or service previously sends a discovery message.

The announcement message includes the information necessary for locating the device and sending messages to the announced object. It usually involves the logical or physical address in the communications network which allows sending messages to the device and any type of unique identifier which allows locating within the device the specific object that said message must handle. In the case of CORBA, this information is an IOR (Interoperable Object Reference) while in the case of ZeroC Ice it is a proxy.

The announcement makes a very simple installation of new devices possible because prior configuration is not required. The system can assume and configure new devices as soon as they appear either automatically or guided by a human operator, as the case may be.

### Methods for integration

The use of a module associated with a sensor or actuator considerably facilitates the integration in any automated system or information system, since the access to the sensor/actuator is done by means of a local API provided by the middleware in a predictable and standardized manner. The sensors/actuators are basic entities in the modeling of the system, simplifying the requirement capture, analysis and design processes, and especially during the implementation. The personnel involved in the development does not require specific training, whatever technology is used by the manufacturer of the devices or the data network used.

### Pair integration

It is possible "to link" a sensor with a remote actuator such that a variation in the magnitude measured by the sensor can trigger a specific action in an actuator. In this configuration, both the sensor and the actuator have a module connected to a common network. The most basic scenario is that in which the sensor triggers the execution of a method for the actuator upon detecting a change in its input.

This only makes sense when the type of the sensor and the actuator are compatible, for example, an all/nothing presence sensor which activates the lights in a room. Although it is an extremely simple service, it has a huge advantage: there is no intermediary and, however, it is not an isolated system.
- Both the sensor and the actuator can be operated by third parties without breaking the relationship that exists between them.
- The relationship is persistent but it can be changed remotely. An operator of the system can modify the configuration of the sensor by means of remote invocations for choosing another different actuator.

This mode of one-to-one integration corresponds with unicast addressing. The sensor only knows the logical address of an actuator at a given time.

### Addressing

It is possible to make the previous scenario more flexible by means of event channels. An event channel can be implemented by means of special network addresses when the network technology supports it. When the limitations of said technology prevent it, services provided by the middleware for this purpose can be used.

The event channel is another distributed object in which all those parties concerned with the value of a sensor can be registered. The sensor feeds the channel with the value of the measured magnitude and the actuators are registered in the channel, such that the event channel functions as a client of the actuators spreading the original information. Broadcast (all), multicast (all those of a group) or anycast (one of the group) addressing can thus be achieved.

However, it is possible that the implementation of the middleware used does not support network technologies present in the prior installation. Even in this case, without the availability of the standard services of the middleware, it is possible to carry out these modes of addressing.

The solution comprises implementing a distributed object by means of a module lacking sensors or actuators. This object has a remote interface similar to that of a standard event channel such as the one provided by the middleware. Consumers can be registered in said channel by means of this interface. The sensor obtains a reference to the object which plays the role of channel and uses it to perform invocations which will be spread to all the registered actuators. These module channels can likewise provide remote interfaces which allow managing the channel or applying filters dynamically.

### Transparent integration

In some specific network technologies in industrial environments, it is typical for electrical or topological limitations to present which prevent or make it difficult to use certain types of sensors/actuators due to their technical characteristics or due to specific circumstances of a specific deployment.

In these cases, it is possible to integrate a module which provides an interface compatible with the prior technology but which uses a remote object to achieve the purpose of the sensor/actuator on which an operation is to actually be performed. This module functions as a client of a remote object, which is what actually has physical access to the sensor/actuator. Transparent integration with the network and the technology of the manufacturer is thus achieved, but the actual technology of the sensor/actuator is made independent. Furthermore, other clients can share said sensor/actuator without interfering in the working of the earlier system, provided that its time restrictions are complied with.

### Dynamic logical interconnection

The use of common middleware provides an environment in which it is simple to offer logical any to any connectivity. A system which incorporates active sensor/actuator modules can be installed without a prior configuration. Then, an operator or administrator can establish direct relationships between sensor and actuator modules, or of the latter with services of the system implemented on conventional computers using the libraries provided by the middleware manufacturer. Said configuration is also made using the remote interfaces offered by the modules like the distributed objects they are.

This method can be very appropriate in buildings or industrial installations in which quite varied use scenarios must be met. For example, the lighting of an exhibition establishment can be controlled by means of individual distributed objects by means of integrating a module to each point of light. The operator can associate one or several physical switches (sensors) with one or several points of light (actuators) (see the Addressing section). These relationships can be very easily established and frequently changed, adapting to the specific needs of each event and stand. It is also possible to arrange a central console in order to be able to operate on any of the points of light (actuator modules) or to see the status of each switch or push button (sensor modules). The complete system can be autonomous and not requiring any additional infrastructure besides the actual modules and communications network. This method for the logical interconnection of modules can be seen as "virtual wiring".

### Embodiments of the Invention

The implementation of the module integrates sensor and/or actuator devices by means of the suitable transducers, one or more network interfaces and a computational device. The choice of this computational device determines two well distinguished embodiments of the invention:

### Strategy software

In this case, the computational device used is based on a low range microcontroller or microprocessor. The functionality of the module is mainly grounded on a software application installed in said microcontroller.

The simplest way to achieve coherent performance in each PicoObject is to use an acknowledgement automaton. In this context, the set of possible messages for each picoObject constitutes a BNF grammar defined by:
- The format of messages used by the communication protocol of the middleware.
- The identity of each object. It must be taken into account that several objects can share the same functional code. This technique is called "default servant".
- The interface or set of interfaces offered by each object. It includes the name, the type of the arguments and the return value of each method.
- The data serialization process (CDR in the case of CORBA).
- The standard interfaces inherited from the communications core (CORBA::Object in CORBA).
- Specific restrictions of the target platform.

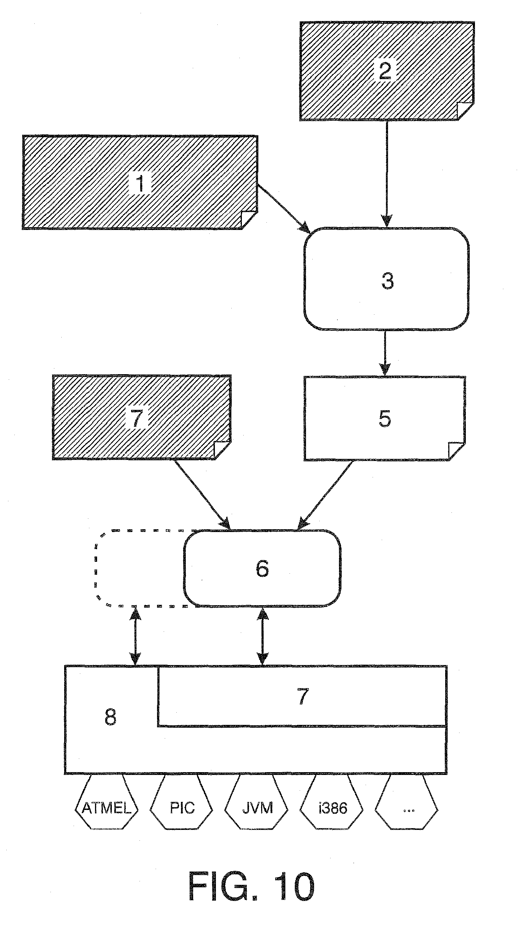

First, a set of basic lexical elements (tokens), i.e., fields which are or are not mandatory appearing in each message and having a known format and size, such as the name of the object, the method, the interface, is defined. Then the set of rules describing the manner in which said tokens (the grammar) can be combined is generated. It is possible to generate a complete functional acknowledgement automaton with this information. The complete development flow is shown in Figure 10.

Any picoObject must include a set of user processes which carry out the implementation of the methods of the objects. These code fragments must be provided by the programmer of the device and are specific for each specific architecture, as occurs in any traditional middleware. When the automaton of a picoObject identifies a complete request message, the execution of the associated user process is automatically triggered. As a consequence, a response message is generated and sent. If the automaton is not capable of identifying a valid request message, the input flow is discarded until the next synchronization point.

The input messages (requests) and output messages (responses) can be handled on the fly using a specifically designed byte level processing. This is a very appropriate solution for devices with very serious memory limitations (only several hundred bytes of programming memory and a little more than a dozen general purpose registers). In these conditions it is not possible to store a complete input message. The request message is processed as it arrives and the response message is also partially generated by copying part of the input data. The last part of the response message is generated by means of the user process associated with each method.

To reduce the memory requirements in the implementation of the automaton, a verification sum is used to check the tokens. Even when the tokens are randomly long, the picoObject compiler replaces them with a single byte. While the picoObject is acknowledging an input message, it calculates a check sum in an incremental mode. This calculation is checked when the number of bytes consumed reaches what is expected. It is really not necessary to check in the limit of each token if the obtained calculation and the expected calculation correspond. If the set of possible messages for an object is organized as a lexicographic tree, it is only necessary to check the bifurcation points to decide which branch to follow. The compiler can often further optimize this task and calculate the verification sums only for the complete messages, with the exception of the arguments.

Our strategy is very different from the earlier middleware miniaturization approaches such as MicroQoSCORBA, which attempt a code miniaturization based on the construction of specific ORB implementations from predefined libraries. The picoObjects use a strategy with greater granularity. It completely generates the code it acknowledges and the messages for each application.

The earlier approach has been applied to two existing middleware: CORBA and ZeroC Ice, referred to as picoCORBA and picolce, respectively. The restrictions imposed by each particular middleware involve different design decisions. These decisions have been discussed in detail in the Interoperability section.

The two prototypes have been developed in assembly language of the PIC Microchip, Java for a standard embedded PC, Java on a Dallas Semiconductors TINI device and C on a conventional PC.

### Hardware strategy

The second embodiment alternative of the invention proposes the creation and integration with hardware objects. A hardware object (hereinafter HwO) is a specific integrated circuit which performs a complex task in a network, such as a sensor and actuator network.

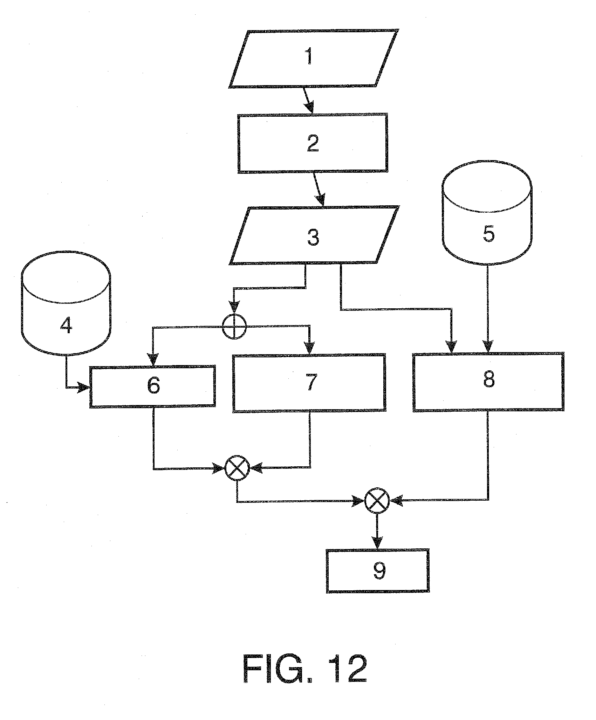

Figure 12 shows the work flow of the HwO generation process. The input to this process is a description of the interface of the object written in IDL or Slice language, such that other objects of the system can see the hardware component. As has been stated, a hardware object offers a typical interface which determines the manner in which the functionality thereof can be accessed (object access protocol). This information is used to generate:
- The communications infrastructure in the chip.
- The implementation of the final hardware object. This implementation can be the result of a process for integration, reusing existing designs. Sometimes it will be necessary to implement new designs if the specific application requires it. It must be pointed out that this is a completely automatic process. Finally, the resulting VHDL code (standard hardware description language) is synthesized.

Sensor networks are modeled as a set of objects that are communicated by means of message passing. Concepts such as attributes, methods or parameters are typical in the software development community given that they have been widely applied to the development of any type of project for decades; this is not the case of hardware. For this reason it is mandatory to establish a hardware object model for reducing the conceptual gap between the software and hardware worlds. The benefits of seeing the hardware components as objects are:
- It allows a transparent integration between software and hardware objects without affecting the design of the system.
- It makes the automatic generation of infrastructure communications possible due to the semantic contribution it involves inside and outside the chip.

To implement logic objects, such as hardware components, the following are defined:
- A standard interface to automate the generation of adapters and,
- A method invocation mechanism that must support it.

A hardware object offers a typical hardware interface:
- Common signals in the system: clock, reset, etc.
- An input signal for each method to activate its execution.
- An output signal for each method to indicate the end of an operation, which is used for synchronization purposes.
- Several input/output data ports.

This hardware object model uses the Ice data type system to assure an inter-component component semantic. When this document was written, it was possible to use in the HwO all the basic types (bool, short, int, float, etc.), structures, fixed size sequences and any combination thereof.

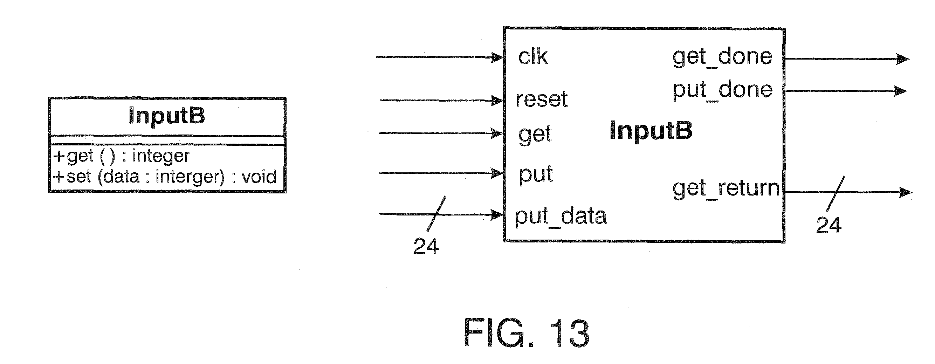

Figure 13 shows the interfaces for an object which implements an integer buffer. The requestor has developed a tool (HAP, HwO Access Protocol) which generates the synchronization information about the hardware method invocation protocol and the VHDL code of the finite state automaton which acknowledges the protocol of the input messages.

### Hardware object platform

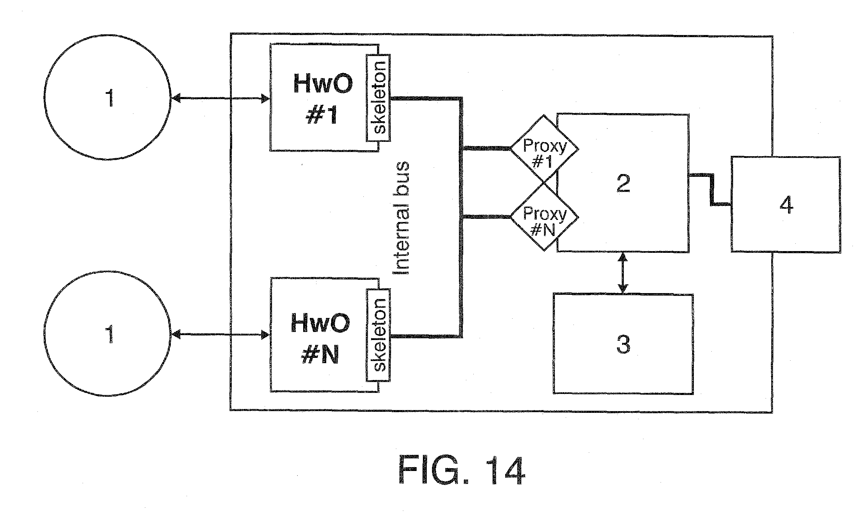

A HwO only implements the functionality for which it has been designed. In this work, the communications of the performance are intentionally decoupled in order to make reusable modules in future designs. By isolating the HwO from the implementation details of the communications, it is achieved that they are not affected by unexpected changes in the communications infrastructure. In order for the HwO to be accessible from outside the chip, a hardware object platform is defined (Figure 14).

Several HwOs can be clustered in a single HwO platform, resources can be shared and implementation costs reduced. Each hardware object of the system has a different unique identifier of the OID. Actually, this identifier corresponds with the base address of the module implemented by the skeleton. The HwOA is responsible for the translation of external OIDs to valid addresses for the internal bus. The proxies and the skeletons coincide in the manner in which the method invocations are translated into a sequence of low level actions on the bus to activate the execution of the operation. The coding/decoding rules are the same as in the software version. Therefore, the method invocation breaks down into reading/writing primitives. The readings and writings are the basic services offered by most buses such that it can be implemented in virtually any platform, regardless of the technology.

### Generation of the interconnection infrastructure

The generation of skeletons (the hardware object adapters) and the HwOA involving the generation of proxies is a critical step in the hardware design flow. The final implementation is optimized to meet the low cost requirements maintaining the automatic process for saving design time.

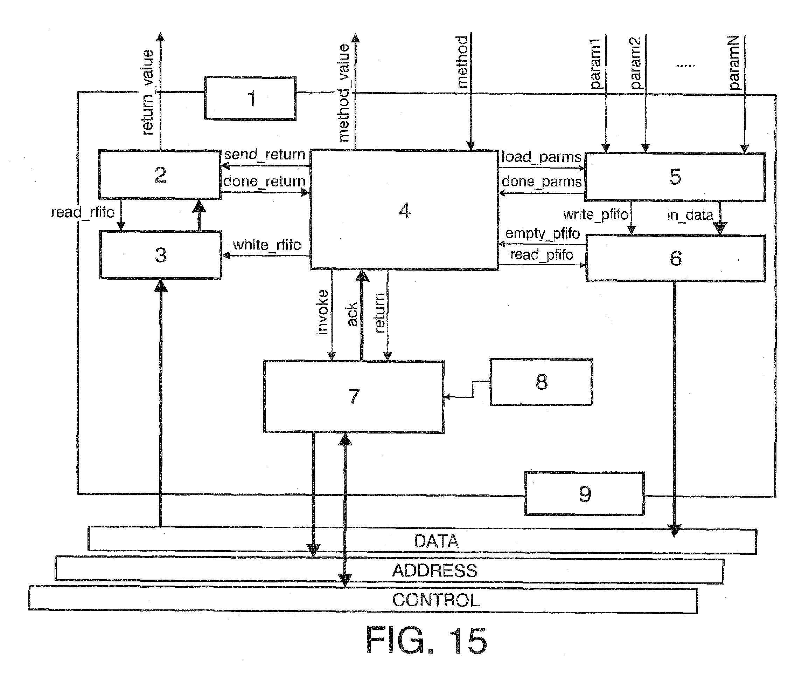

Two templates which will be specialized according to the number and type of methods to be implemented are defined in this memory. Figure 15 shows the general architecture of a proxy. The figure does not include the skeleton because of space issues. The most important modules are the Port Acquisition Units (PAU) and the Port Delivery Unit (PDU), which are in charge of adapting the data received (HwO or bus) according to the object access protocol imposed by the HwO interface.

The Combinational Adaptation Logic (CAL) translates the control signals into specific commands of the bus and vice versa. The correspondence between the control signals of the FSM and the control signals of the bus are separately defined in configuration files.

The control logic implements the FSM by carrying out the adaptation to the local protocol (access to the object) and the remote protocol (communications bus).

Only one skeleton is produced for each hardware object which exports at least one method. Only one proxy (actually a skeleton) is generated for each method that can be remotely invoked by the client. This reduces the logic used in the proxy given that nothing is generated for the methods that are not used.

Other optimizations have been introduced by reusing the logic for two or more definitions of methods (which do not have to correspond to the same object/class) which have the same physical hardware implementation.

### Detailed Description in reference to the Drawings

In the implementation of conventional middleware, a remote invocation (Figure 3) involves an object adapter, an object map and a servant, all in a server frame.

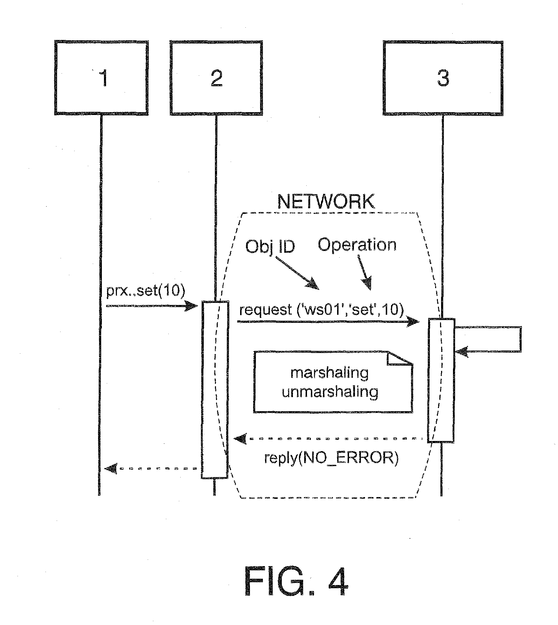

In contrast, the same scenario when one of the modules object of the invention (Figure 4) is used requires only the acknowledgement of the invocation method and the generation of the response, without the intervention of any other software element.

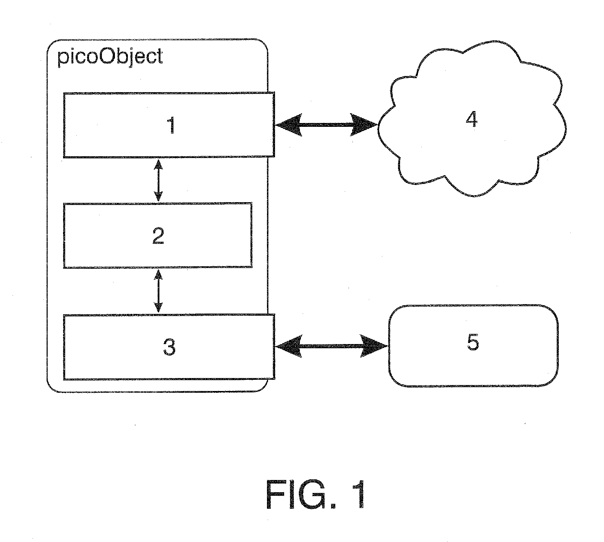

When the module is used as a means for accessing a sensor/actuator consists of three components (Figure 1). The first one is a network interface of any technology, the second one is a computational device and finally a transducer which adapts and controls the signals which are sent and come from the sensor/actuator.

An alternative configuration of the module (Figure 1) is used for sending one to many messages by way of a simple event channel.

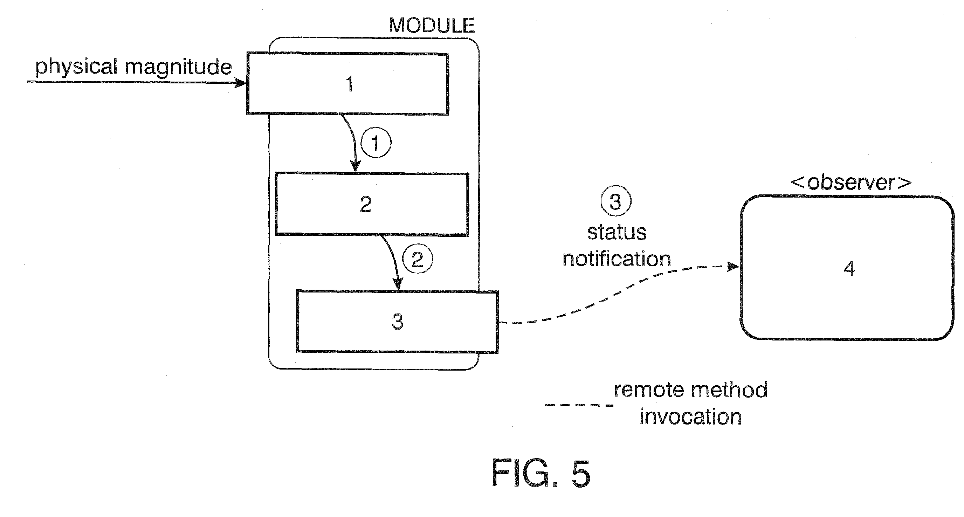

Figure 5 shows a basic use scenario of an active object. It is a sensor which reports to a second "observer" object any change which occurs in the magnitude that is measured. The "observer" object can be a conventional object implemented with the libraries provided by the manufacturer middleware, but it can also be an embedded object which uses one of the modules described herein.

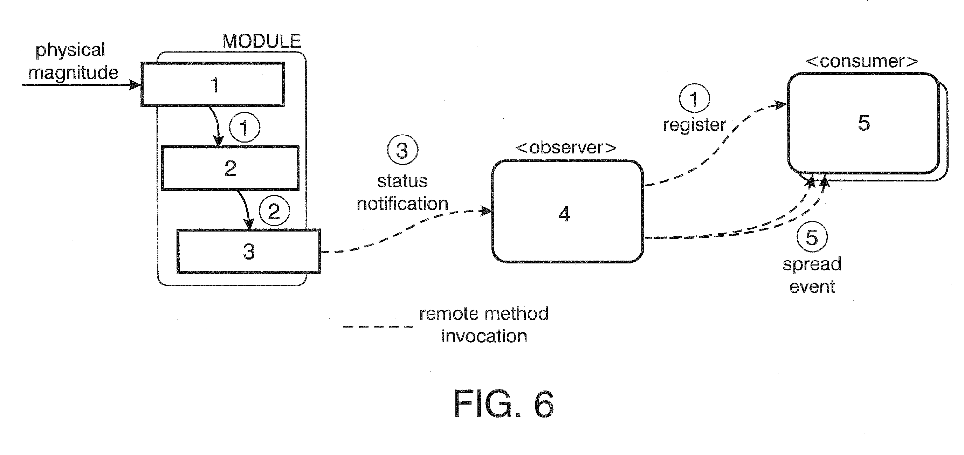

Figure 6 shows another use scenario for active objects. In this case, the "observer" object is an event channel, i.e., an object which can forward the invocations it receives to others, and thus carry out the event spreading possibilities described in the Active objects section mentioned above. Like before, this event channel can be provided by the middleware or it can be constructed by means of a refsec:addressing module.

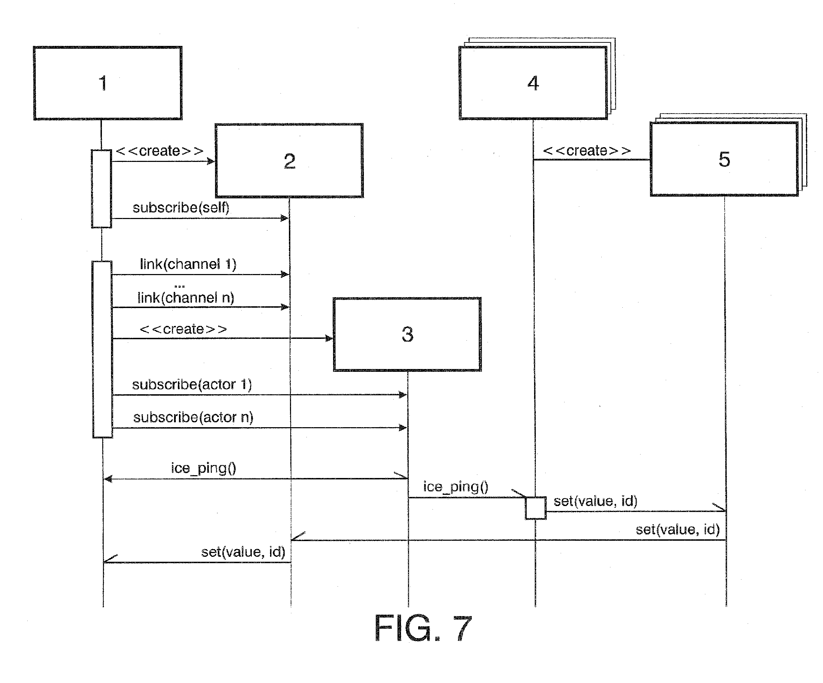

The use of active objects (in their reactive modality) allows implementing a query method for a random group of sensor/actuator objects by means of using event channels. Figure 7 depicts the sequence of operations that occurs while setting up the mechanism and how the application receives the results.

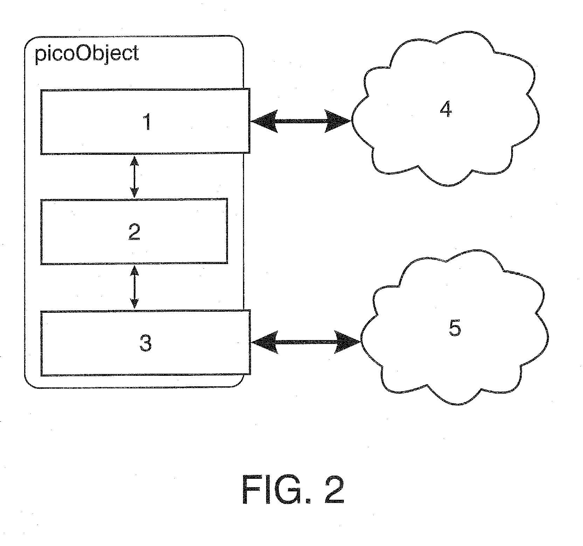

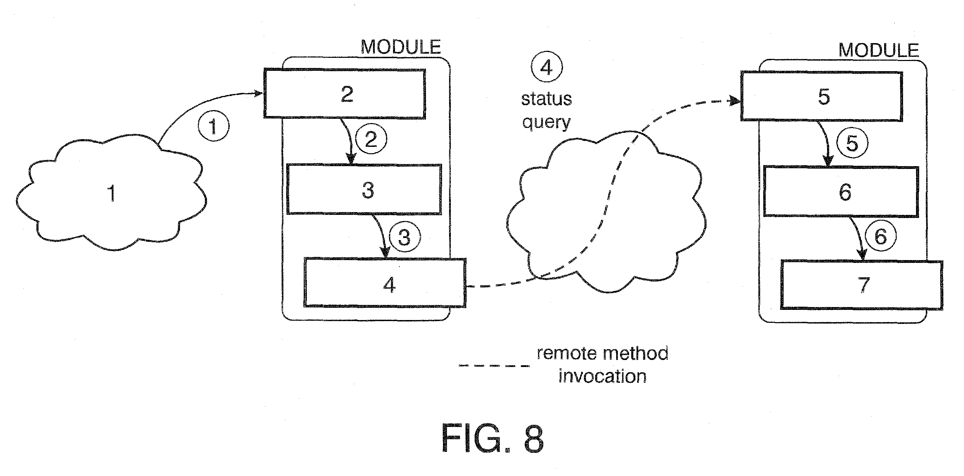

Figure 8 shows the use of a module with the configuration of Figure 2 for achieving the integration of a remote sensor, which uses a different technology. The purpose is to integrate in a specific purpose network (like an industrial control network) a device that in principle is incompatible. A module working like a bridge between different networks and another module for integrating the sensor/actuator are used. When the specific purpose network addresses the device, the module automatically performs a remote invocation of the embedded remote object which is actually available to perform access to the sensor/actuator.

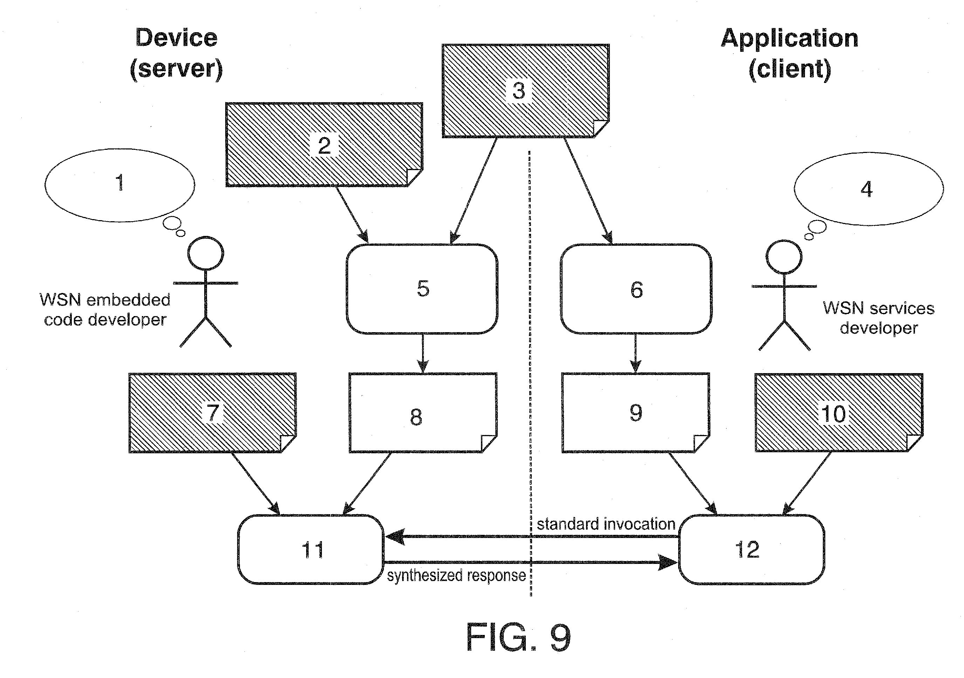

Figure 9 shows the roles of the service programmer (right side) and of the module programmer (left side) and their relationship with the necessary code and interface specifications.

The application which is installed in the module is obtained by means of the work flow described in Figure 10. The inputs correspond with the rectangles with a gray background. The developer must provide:
- An interface definition file(Slice, IDL, etc.).
- A file which indicates the objects that the module it will house and the interfaces that each of them implements.
- A file with the implementation of the methods of the objects in the native language of the computational device used in the module.

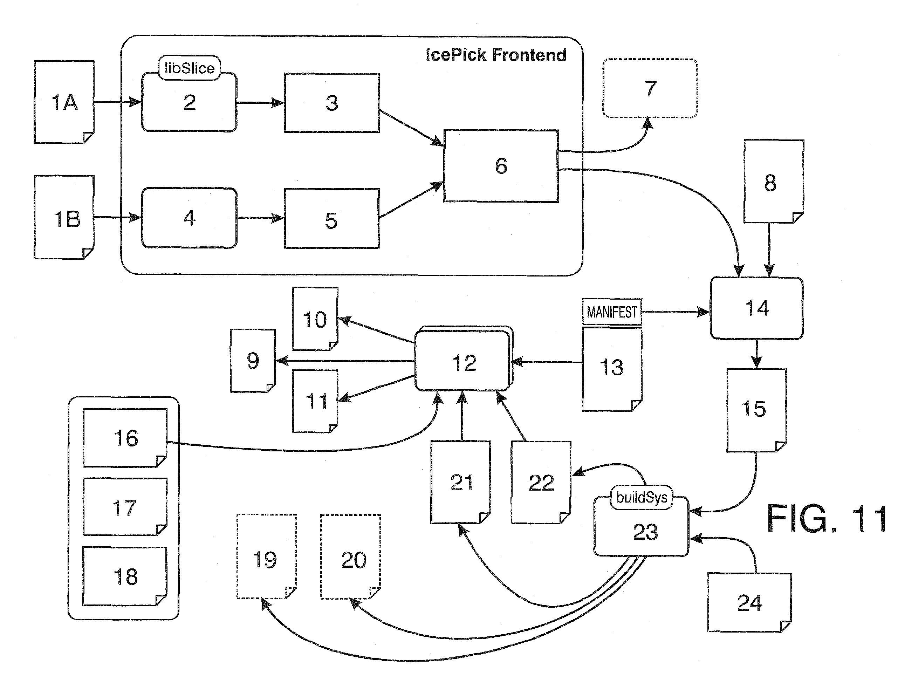

Figure 11 shows the diagram of a specific compiler as an example of implementation of the process described in Figure 10 for ZeroC Ice middleware. It starts from a set of Slice files in which the interfaces of the objects are located, and a file in IcePick language, up to the generation of the bytecode, which identifies the specific instances and their types.

The frontend of the compiler processes the input files and generates an intermediate specification which includes the objects described, their types and other peculiarities. Another process is fed from this specification and generates an intermediate file by means of a set of virtual instructions (Virtual ISA). This language called FSM (Finite State Machine) is a determined specification of state machines which acknowledge the request messages and generate the response messages.

In the following step, a compiler takes said file FSM as input and generates code in an implementation language, such as C for example. Finally, the file generated together with another file provided by the user (called usercode and written in the same implementation language) is linked. The usercode file must be written explicitly for the destination platform and includes the code which will be executed as a response to the invocations received, which normally involves accessing specific hardware which allows reading/modifying the value of the sensor/actuator connected to the module.

The work flow for the second embodiment of the invention, called HwO (hardware objects), is depicted in Figure 12. The process is similar to that of Figure 9 although the results are different.

Figure 13 is an example of a hardware object for a set (buffer) of integers. The synchronization signals necessary for the integration thereof in the design are shown.

The HwO do not have the capability of communicating with the outside. To that end they use the "Hardware object platform" (Figure 14). A very suitable decoupling is thus achieved due to changes in the infrastructure.

The connection of the HwO to the bus is performed by means of a proxy.

Figure 15 shows the typical configuration of a proxy, including the adaptation of the data from the bus by means of the Port Acquisition Units (PAU) and the Port Delivery Unit (PDU).

### Description of the Reference Number of the Drawings

Figure 1:
   1.- Communications (eth, BT, zigbee...)
   2.- Control (PIC, TINI, MICA... )
   3.- Transducer (sensor or actuator)
   4.- Network
   5.- Physical environment
Figure 2:
   1.- Network interface technology A
   2.- Control (PIC, TINI, MICA... )
   3.- Network interface technology B
   4.- Network technology A
   5.- Network technology B
Figure 3:
   1.- Client
   2.- Proxy
   3.- Object adapter
   4.- Active object map
   5.- Servant
Figure 4:
   1.- Client
   2.- Proxy
   3.- PicoObject
Figure 5:
   1.- Sensor
   2.- Control
   3.- Network interface
   4.- Distributed object, either standard or implemented as a module
Figure 6:
   1.- Sensor
   2.- Control
   3.- Network interface
   4.- Event channel, either conventional or implemented as a module
   5.- Distributed object, conventional or module
Figure 7:
   1.- Application
   2.- Response channel
   3.- Query channel
   4.- Sensor/actuator object
   5.- Observer of the object
Figure 8:
   1.- Specific purpose network
   2.- Network interface
   3.- Control
   4.- Network interface
   5.- Network interface
   6.- Control
   7.- Sensor/actuator
Figure 9:
   1.- Limitations of the device, Energy consumption, RF coverage, Platforms...
   2.- Definition of objects reporting the interfaces they implement
   3.- Interface definition (IDL, Slice, etc..)
   4.- Distributed objects, Basic service, System characteristics, Scalability
   5.- Interface compiler for picoObjects
   6.- Standard Slice compiler
   7.- Implementation of the methods (C, asm, vhdl)
   8.- Specification of the acknowledgement automaton
   9.- "Ends" for the client
   10.- Application code (C++, Java, C#)
   11.- PicoObject (server)
   12.- Application (client)
Figure 10:
   1.- Object definition, indicating the interfaces they implement
   2.- Interface definition (IDL, Slice, etc..)
   3.- Interface controller for picoObjects
   4.- Implementation of the methods (C, asm, vhdl)
   5.- Specification of the acknowledgement automaton
   6.- PicoObject (server)
   7.- Portable virtual machine for picoObjects
   8.- Specific platform
Figure 11:
   1A.- SLICE source
   1B.- Icepick source
   2.- Slice Parser
   3.- Slice symbol table
   4.- Icepick parser
   5.- Icepick symbol table
   6.- Symbol table <façade>
   7.- Other backends
   8.- FSM Templates
   9.- Binary (others)
   10.- ELF binary (PC)
   11.- MICA2 binary (Tiny OS)
   12.- C Compiler
   13.- Platform dependent
   14.- FSM backend
   15.- FSM file
   16.- C virtual machine
   17.- Python virtual machine
   18.- PIC virtual machine
   19.- PIC asm bytecode
   20.- Python bytecode
   21.- C bytecode
   22.- Makefile
   23.- FSM compiler
   24.- Platform restrictions Inputs provided by the programmer:
      References numbers 9, 10, 11, 15, 19, 20, 21, 22 Results generated by the compiler: remaining reference numbers.
Figure 12:
   1.- Slice description
   2.- Generation of the interface for the HWO
   3.- Object access Protocol Wrapper
   4.- IP repository
   5.- Template library
   6.- IP integration
   7.- Development of the logic of the object
   8.- Skeleton/proxy/AO generation
   9.- VHDL code
Figure 14:
   1.- Sensor/actuator
   2.- HwO adapter
   3.- OID conversion tables
   4.- Network interface
Figure 15:
   1.- Interface with IP
   2.- PDU
   3.- Return FIFO
   4.- CONTROL LOGIC
   5.- PAU
   6.- Parameter FIFO
   7.- Combination adaptation logic
   8.- ADDRESS OF THE METHOD
   9.- Interface with the bus/network

### References

[1] Object Management Group, The Common Object Request Broker: Architecture and Specification, ed. 2.3, June 1999. Available in http://www.omg.org/, document id: 98-12-01.
[2] M. Henning, M. Spruiell. Distributed Programming with Ice, 2006, available online at http://www.zeroc.com/ (Last visited 26-2-2007).
[3] Web Services Architecture, available online at *http:*//*www.w3.org*/*TR*/*ws-arch*/*.*
[4] Sun Microsystems, Jini Architecture Specification, ed. 1.2, available online at http://www.sun.com/ (Last visited 26-2-2007).
[5] Object Management Group, Minimum CORBA Specification, ed. 2.3, August 2002, available online at (Last visited 26-2-2007) http://www.omg.org/, document id: 02-08-01
[6] Rodrigues, G., Ferraz, C. A CORBA-Based Surrogate Model on IP Networks, In Proceedings of the 21st Brazilian Symposium on Computer Networks, 2003.
[7] Fabio Kon, F. Costa, G. Blair, Roy Campbell. The Case for Reflective Middleware. Communications of the ACM: special issue in adaptive middleware, 2002; Volume 45, Issue 6, pp 33-38.
[8] Manuel Roman, M. Dennis, Mickunas, Fabio Kon and Roy Campell. LegORB and Ubiquitous CORBA, In Proceedings of IFIP/ACM Middleware'2000 Workshop on Reflective Middleware, Feb 2000; pp. 1-2.
[9] M. Román, Fabio Kon, Roy H. Campbell, Reflective Middleware: From Your Desk to Your Hand, IEEE Distributed Systems Online, 2001; 2(5).
[10] The ACE ORB, available online at *http:*//*www.theaceorb.com*/*.*
[11] PrismTech, OpenFusion e*ORB Real-time Embedded Whitepaper, available online at (Last visited 26-2-2007) http://www.prismtechnologies.com/.
[12] Haugan, Olav. Configuration and Code Generation Tools for Middleware Targeting Small, Embedded Devices, M.S. Thesis, Dec 2001, Washington State University.
[13] V Subramonian, G. Xiang. Middleware Specification for Memory-Constrained Networked Embedded Systems, In 10th IEEE Real-Time and Embedded Technology and Applications Symposium (RTAS), 2004; pp 306-313.
[14] SaJe, Real-Time Native Java Execution. Available online at *http:*//*saje.systronix.com*/*.*
[15] Tiny Internet Interface. Available online at *http:*//*www.ibutton.com*/*TIN*/*index.html*
[16] J. Morena, F. Moya, J.C. López. Implementación de un ORB para Dispositivos Empotrados, Symposium on Informatics and Telecommunications, Seville, Sep 2002, p 25-27.
[17] M. Roman, A. Singhai, Integrating PDAs into Distributed Systems: 2K and PalmORB, In Proceedings of International Symposium on Handheld and Ubiquitous Computing, 1999, pp. 137-149.
[18] F. Moya, J.C. López. SENDA: an alternative to OSGi for large-scale domotics, Networks, The Proceedings of the Joint International Conference on Wireless LANs and Home Networks (ICWLHN 2002) and Networking (ICN 2002), World Scientific Publishing, pp 165-176, Aug 2002.
[19] W. Nagel, N. Anderson. A Protocol for Representing Individual Hardware Devices as Objects in a CORBA Network, Real-time and Embedded Distributed Object Computing Workshop, Julio 2002.
[A] F. Moya D. Villa F.J. Villanueva J. Barba F. Rincón J.C.López J. Dondo "Embedding Standard Distributed Object-Oriented Middlewares in Wireless Sensor Networks Wireless". Communications and Mobile Computing Journal, March 11, 2007
[B] D. Villa F.J. Villanueva F. Moya F. Rincón J. Barba J.C. López "Embedding a general purpose middleware for seamless interoperability of networked hardware and software components" International Conference on Grid and Pervasive Computing, May 1,2006
[C] D. Villa F.J. Villanueva F. Moya J. Barba F. Rincón J.C. López "Minimalist Object Oriented Service Discovery Protocol for Wireless Sensor Networks" International Conference on Grid and Pervasive Computing, May 13,2007
[D] D. Villa F.J. Villanueva F. Moya F. Rincón J. Barba J.C. López "ASDF: An Object Oriented Service Discovery Framework for Wireless Sensor Networks" International Journal of Pervasive Computing and Communications, December 2008

## Claims

1. Module housing one or several distributed objects accessible by a general purpose communication middleware which, by means of a finite state machine, acknowledges the request messages from conventional clients and generates synthetic responses, **characterized in that** it integrates:
• A simple computational element (low range microcontroller or microprocessor) which processes the request messages and generates the responses,
• A communications device which allows the computational element to read and write messages on a data network, and
• An element which implements a specific finite state machine for the acknowledgement of those messages necessary for interacting with the objects housed in the module.

2. Module according to claim 1, **characterized by** integrating a transducer for reading of one or several sensors associated with distributed objects housed in the module.

3. Module according to claim 1, **characterized by** integrating a transducer which allows the reading and/or modification of the status of one or several actuators associated with distributed objects housed in the module.

4. Module according to claim 1, **characterized by** providing remote access to a sensor or actuator by concealing from the client the peculiarities of its technology, measurement system, tolerance and other features specific of each sensor or actuator device.

5. Module according to claim 1, **characterized by** using one or several communication devices for the purpose of forwarding messages from the middleware to other conventional modules or distributed objects.

6. Module according to claim 2, **characterized by** the sending of asynchronous invocations to a previously configured distributed object, reporting the status of the sensor integrated therein.

7. Module according to claim 3, **characterized by** the sending of asynchronous invocations to a previously configured distributed object, reporting the status of the actuator integrated therein.

8. Method for the specification of the objects housed in a module like the one of claim 1, **characterized by**:
• The listing of the files describing the types and interfaces necessary in the interface description language typical of the general purpose middleware.
• The listing of the local access points (protocol, address, ports) which determine the forms of communication with the objects housed in the module.
• For each local access point, the listing of the objects housed in the module using that access point to receive messages, including the identity of the object, the interface it implements, and the modes of communication it must support.
• Optionally, the listing of the access points of conventional remote objects with which the module can communicate.
• For each local access point, the listing of the objects which can be invoked by the module, including the identity of the object, the interface it implements, and the mode of communication it must use.
• Optionally, the listing of the invocations to be made on remote objects during the initialization phase, indicating all the arguments, having to declare the remote objects upon listing the remote access points.
• Optionally, the listing of the invocations to be made periodically on remote objects, indicating the period and the arguments, having to declare the remote objects upon listing the remote access points.
• Optionally, the listing of the invocations to be made due to the • occurrence of events in the module, indicating the object, the period • and the arguments, and the events possible in a module depending on the specific embodiment, and including the receiving of invocations on objects housed in the module, the activation of sensors available in the module, the culmination of calculation processes in the module, etc.

9. Method for message acknowledgement by means of state machines, based on the sequential execution of a bytecode specifically designed to reduce the total memory consumption, and **characterized by**:
• A set of general purpose registers and a work register.
• A set of persistent registers, the value of which remains even with supply losses.
• A set of handlers for specific conditions of interest of each module (reset, protocol error, timer trigger, message arrival, external events) configurable by means of specific instructions.
• A repertory of instructions for a virtual machine oriented at message processing which includes instructions for:
• Initializing the message acknowledge.
• Receiving and transmitting bytes of the communications device of the module, either using registers as a data warehouse, computing a check sum, ignoring the bytes, or forcing a determined alignment.
• Transmitting configurable data from a static template of which only a byte is altered.
• Altering the handlers of the different conditions of interest of the module.
• Generating protocol errors when a check sum is not consistent with what is expected.
• Condition hop depending on the register values or on the computed value of a check sum.
• Invoking a native code defined by the user.
• A program using the repertory described for the acknowledgement of the messages corresponding to invocations of the objects housed in the module and the generation of the messages corresponding to the interaction with others distributed objects.
• A native code fragment defined by the user which implements the specific logic of the module due to invocations or due to events of interest (activation of actuators, reading of sensors, storage of data, ...).

10. Method for message acknowledgement according to claim 9, **characterized by** making it possible to obtain and validate messages without needing to store more than one syntactic element at the same time.

11. Method according to claim 9, **characterized in that** it integrates electric or electronic devices in a general purpose communication middleware.

12. Method for providing the interaction of software developed for conventional middleware with random devices, **characterized in that** it makes software development independent from the devices.

13. Method for transformation of the specifications produced according to claim 8 for the automatic generation of specific message acknowledgers according to claim 9, **characterized by**:
• Determining the complete set of messages to be acknowledged by means of the combination of the specifications generated according to claim 6 and the specification of the remote interfaces in the description language of the standard middleware to be emulated, furthermore automatically adding the implicit messages in the middleware to be emulated (e.g. remote introspection interface).
• For each valid incoming message generating a block of acknowledgement instructions, acknowledging the static parts of the message by means of a check sum, storing the dynamic parts of the message in registers of the virtual machine and/or using them for the error check, for passing arguments to the native user code and for the generation of response messages, and generating the response messages using template transmission instructions according to claim 9.
• The invocations to be made in response to invocations received are translated into the generation of messages by means of template transmission instructions which are inserted before transferring control to the native code defined by the user.
• The invocations to be made periodically and the invocations to be made in response to events of the module are translated into handlers of conditions of interest according to claim 6, each invocation being translated into the generation of messages by means of template transmission instructions.

14. Method according to claim 9 for the integration of a sensor and an actuator of different manufacturers and technologies through a conventional data network, **characterized in that** it uses standard middleware.

15. Method for integration according to claim 14, **characterized by** the use of broadcast addressing, such that the data from a single sensor reaches all the linked actuators.

16. Method for integration according to claim 14, **characterized by** the use of multicast addressing, such that the data from a single sensor reaches a group of actuators sharing a common feature.

17. Method for integration according to claim 14, **characterized by** the use of anycast addressing such that the data from a single sensor reaches at least one actuator of a group defined beforehand.

18. Method for integration, **characterized in that** it allows the reading of a sensor connected to a remote data network which uses a different technology in a transparent manner, this integration enabling the processing of the remote sensor as if it were connected to the local network.

19. Method for integration according to claim 18, **characterized by** the use of a remote actuator.

20. Module according to claim 5, **characterized by** its adaptation for the diffusion of events as autonomous equipment, without the intervention of standard services of the middleware.

21. Method for the "virtual" interconnection of modules according to claim 2, **characterized in that** it allows remotely administering the relationships between sensors and actuators in a system in production, without needing to reset any of the components involved.

22. Method for the announcement of devices like the one of claim 1, based on the synthesis of messages of the standard middleware, **characterized in that** it uses the addressing modes of the underlying network technology.

23. Method for the announcement of devices according to claim 22, **characterized by** diffusing the messages using claim 5.

24. Method for the deployment of applications on the module network according to claim 1, based on the use of a memory external to the computational device, **characterized in that** this memory can be remotely updated by means of a distributed object housed in the module itself.

25. Method for the propagation of the status of a sensor according to claim 6, **characterized by** the use of a module according to claim 5.

26. Method for the propagation of the status of an actuator according to claim 7, **characterized by** the use of a module according to claim 5.

27. Method for the remote reading of the value of a random group of sensor/actuator objects implemented according to claim 6, **characterized by** the use of a single event channel for query and another one for collecting the results, such that a single message allows the reading of all the objects of the group, the service/application making the query being able to reuse the created channels and allowing it, from the information received, to establish a correspondence between the value and the object which produces it.
